Europäisches Patentamt

European Patent Office

Office européen des brevets

(19)

(11) Veröffentlichungsnummer: **0 260 481 B1**

(12) # EUROPÄISCHE PATENTSCHRIFT

(45) Veröffentlichungstag der Patentschrift: 17.04.91

(51) Int. Cl.⁵: **B01D 53/04**, B01D 53/26

(21) Anmeldenummer: 87112265.1

(22) Anmeldetag: 24.08.87

(54) **Verfahren und Vorrichtung zum Abscheiden und Rückgewinnen von flüchtigen Lösungsmitteln.**

(30) Priorität: 16.09.86 EP 86112786

(43) Veröffentlichungstag der Anmeldung:
23.03.88 Patentblatt 88/12

(45) Bekanntmachung des Hinweises auf die
Patenterteilung:
17.04.91 Patentblatt 91/16

(84) Benannte Vertragsstaaten:
BE ES GR IT

(56) Entgegenhaltungen:
DE-A- 2 214 663
DE-A- 3 533 313
DE-C- 554 209
FR-A- 1 003 705
GB-A- 2 106 798

(73) Patentinhaber: **OTTO OEKO-TECH GMBH &
CO. KG**
**Konrad-Adenauer-Strasse 25**
**W-5000 Köln 50(DE)**

(72) Erfinder: **Schweitzer, Stefan**
**Schömkensweg 28**
**W-4050 Mönchengladbach 1(DE)**
Erfinder: **Golde, Ernst**
**Grönkesdyk 12**
**W-4150 Krefeld(DE)**
Erfinder: **Mathews, Waldemar, Dr.**
**Am Schwarzwasser 2**
**W-5010 Bergheim(DE)**

(74) Vertreter: **Münzhuber, Robert, Dipl.-Phys.**
**Patentanwalt Rumfordstrasse 10**
**W-8000 München 5(DE)**

Rank Xerox (UK) Business Services

## Beschreibung

Die Erfindung betrifft ein Verfahren und eine Vorrichtung zum Abscheiden und Rückgewinnen von flüchtigen Lösungsmitteln aus wasserdampfhaltiger Abluft von Trockenreinigungsmaschinen, Metallentfettungsanlagen, Anlagen zum Reinigen von elektrischen Leiterplatten, Lösungsmittelbädern und ähnlichen Anlagen.

Aus der DE-A-554 209 ist ein Verfahren zur Rückgewinnung organischer Dämpfe aus feuchten Gasen bekannt, bei dem die Abluft durch regenerierbare Molekularsiebe hindurchgeleitet und dann in die Atmosphäre abgegeben wird, wobei die Abluft zunächst durch eine ausschließlich den Wasserdampf und anschließend durch eine ausschließlich die Lösungsmitteldämpfe adsorbierende Molekularsiebpackung hindurchgeleitet wird und die beiden Molekularsiebpackungen unabhängig voneinander durch Erhitzen mittels Luft oder Inertgas regeneriert werden. Eine direkte Rückführung der wiedergewonnenen organischen Lösungsmittel in einen Arbeitsprozeß erfolgt dabei nicht.

Aufgabe der vorliegenden Erfindung ist es deshalb, das erwähnte Verfahren und die das Verfahren durchführende Vorrichtung so zu verbessern, daß bei seiner Anwendung bei Trockenreinigungsmaschinen, Metallentfettungsanlagen, Anlagen zum Reinigen von elektrischen Leiterplatten, Lösungsmittelbädern und ähnlichen Anlagen auf wirtschaftliche Weise nicht nur eine wirkungsvolle Abscheidung des Wasserdampfs und der Lösungsmitteldämpfe er-folgt, sondern auch das rückzugewinnende Lösungsmittel im wesentlichen wasserfrei anfällt und in den Arbeitsprozeß der Anlage unmittelbar rückführbar ist.

Das erfindungsgemäße Lösungsverfahren ist im Patentanspruch 1 gekennzeichnet. Dabei wird eine Wasserdampf adsorbierende Molekularsiebpackung und eine die Lösungsmitteldämpfe adsorbierende Molekularsiebpackung verwendet, wobei sich die beiden Packungen in gesonderten Desorptionskreisen befinden.

Eine Vorrichtung zur Durchführung des Verfahrens nach Anspruch 1 ist im Anspruch 5 gekennzeichnet.

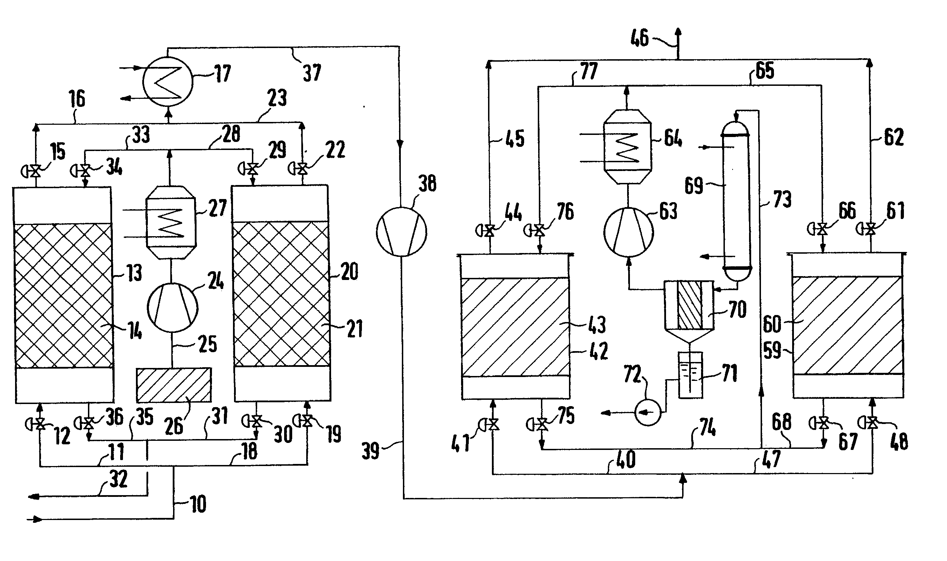

Auf der Zeichnung zeigt die einzige Figur eine Schemaskizze zur Erläuterung einer Ausführungsform der erfindungsgemäßen Vorrichtung für einen kontinuierlichen Betrieb.

Bei der Vorrichtung nach der Figur werden die zu behandelnden Abgase, die sowohl Feuchtigkeit (Wasserdampf) als auch Lösungsmittelrückstände (Lösungsmitteldämpfe) enthalten, über eine Rohrleitung 10 zugeführt. Die Rohrleitung 10 verzweigt sich, wobei die eine Zweigleitung 11 über eine Klappe 12 zu einem Adsorptionsbehälter 13 führt, in welchem sich eine Molekularsiebpackung 14 befindet, und zwar von einem an sich bekannten Wasserdampf adsorbierenden Typ. Diese Molekularsiebpackung 14 wird von unten nach oben vom Wasserdampf durchströmt, wobei die Luftfeuchtigkeit bis auf einen Taupunkt von max. -80° C reduziert wird, ohne daß dabei eine nennenswerte Adsorption des im Abgas enthaltenden Lösungsmitteldampfes erfolgt. Über eine Klappe 15 und eine Leitung 16 gelangt das von der Feuchtigkeit befreite Abgas zu einem Wärmetauscher 17, in welchem es von der Adsorptionswärme befreit und auf etwa 5 bis +20° C abgekühlt wird.

Von der Abgasleitung 10 geht an der erwähnten Verzweigung eine zweite Leitung 18 ab, die über eine Klappe 19 zu einem zweiten Adsorptionsbehälter 20 führt, in welchem sich eine Molekularsiebpackung 21 befindet. Behälter 20 und Molekularsiebpackung 21 sind mit dem Behälter 13 und der Molekularsiebpackung 14 identisch. Vom Behälter 20 geht über eine Klappe 22 eine Leitung 23 ab, die, wie die vorerwähnte Leitung 16, zum Wärmetauscher 17 führt. Während nun der Adsorptionsbehälter 13 beladen wird (die Klappen 12 und 15 sind offen), wird der vorher beladene Behälter 29, dessen Klappen 19 und 22 geschlossen sind, regeneriert. Hierzu wird von einem Gebläse 24 über eine Leitung 25 von einem Filter 26 Luft, Inertgas oder Reingas aus einer Leitung 46 angesaugt und einem Aufheizer 27 zugeführt.

In diesem wird die Luft bzw. das Inertgas oder das Reingas entweder direkt (elektrisch) oder indirekt (Dampf oder Wärmeträgeröl) auf eine Temperatur zwischen 100 und 200° C erhitzt. Die heißen Gase gelangen dann über eine Leitung 28 und eine -offene- Klappe 29 in den Adsorptionsbehälter 20 und durchströmen die Molekularsiebpackung von oben nach unten. Dabei wird das in der Packung 21 adsorbierte Wasser ausgetrieben, und der Wasserdampf gelangt über eine Klappe 30 und eine Leitung 31 zu einer Auslaßleitung 32, aus welcher er in die Atmosphäre austritt. Nach der Regeneration der Molekularsiebpackung 21 wird der Erhitzer 27 abgeschaltet und die Molekularsiebpackung 21 kaltgeblasen, indem dem Gebläse 24 als Kühlluft Reingas von der Leitung 46 zugeführt wird.

Nach erfolgter Regeneration und Abkühlung der Molekularsiebpackung 21 werden die Adsorptionsbehälter 13 und 20 umgeschaltet, d.h. es wird die Molekularsiebpackung 14 regeneriert und die Molekularsiebpackung 21 beladen. Für den Regenerationsvorgang weist der Behälter 13 -ähnlich wie der Behälter 20- eine vom Erhitzer 27 herführende Leitung 33 mit Klappe 34 sowie eine zur Auslaßleitung 32 führende Leitung 35 mit Klappe 36 auf.

Nach der Adsorption der Feuchtigkeit an einer der beiden Molekularsiebpackungen 14, 21 und Abkühlung im Wärmetauscher 17 wird das Abgas über eine Leitung 37 von einem Gebläse 38 angesaugt und über eine Leitung 39 einem zweiten Paar von Adsorptionsbehältern zugeführt. So kann das Abgas über eine Zweileitung 40 und eine Klappe 41 zu einem Adsorptionsbehälter 42 gelangen, in welchem sich eine Molekularsiebpackung 43 befindet. Die Molekularsiebpackung 43 ist -in bekannter Weise- so ausgelegt, daß sie die im Abgas befindlichen Lösungsmitteldämpfe zu adsorbieren vermag. Das Abgas durchströmt also die Molekularsiebpackung 43 von unten nach oben, wobei es von den Lösungsmitteldämpfen befreit wird, und gelangt dann über eine Klappe 44 und eine Leitung 45 zu einer Auslaßleitung 46, aus der das nunmehr sowohl von Feuchtigkeit als auch von Lösungsmitteldämpfen befreite Abgas in die Atmosphäre austritt.

Das vom Gebläse 38 über die Leitung 39 zugeführte Abgas kann aber auch, je nach Schaltung der Klappen, über eine Zweigleitung 47 und eine Klappe 48 in einen Adsorptionsbehälter 59 gelangen, in welchem sich eine Molekularsiebpackung 60 befindet. Behälter 59 und Packung 60 sind identisch mit dem Behälter 42 und der Packung 43. Über eine Klappe 61 und eine Leitung 62 gelangt das den Behälter 59 ausströmende Abgas ebenfalls zu der vorerwähnten Auslaßleitung 46.

Während nun der Behälter 42 beladen wird, wird der Behälter 59 regeneriert. Zu diesem Zweck fördert ein Gebläse 63 im geschlossenen Kreislauf Luft oder Inertgas zu einem Erhitzer 64. In diesem Erhitzer 64 erfolgt eine direkte (elektrisch) oder indirekte (Dampf oder Wärmeträgeröl) Erhitzung der Luft bzw. des Inertgases auf eine Temperatur zwischen 40°C und 250°C. Das erhitzte Gas gelangt über eine Leitung 65 und eine Klappe 66 in den Adsorptionsbehälter 59, wobei es die Molekularsiebpackung 60 von oben nach unten durchströmt und dabei das in einem vorherigen Beladevorgang adsorbierte Lösungsmittel austreibt. Die Lösungsmitteldämpfe werden über eine Klappe 67 und eine Leitung 68 einem Kondensationskühler 69 zugeführt, in welchem eine derartige Abkühlung erfolgt, daß der überwiegende Anteil der Lösungsmitteldämpfe verflüssigt wird. Entsprechend dem Taupunkt des mit Lösungsmittel beladenen Gasstroms wird der Kondensationskühler 69 mit Kühlwasser (etwa 20°C), Sole (etwa -20°C bis +5°C) oder Kältemittel (etwa -40°C bis -20°C) beschickt. In einem Tropfenabscheider 70 werden die flüssigen Lösungsmittel vom Kreislaufgas getrennt und fließen in eine Pumpvorlage 71. Von dort werden sie mit einer Pumpe 72 in den - nicht gezeichneten - Lösemitteltank zurückgepumpt. Die von den Lösungsmitteldämpfen im wesentlichen befreite Kreisluft gelangt dagegen über eine Leitung 73 wieder auf die Saugseite des Gebläses 63, wird also dem Kreislauf wieder zugeführt.

Nach einer Zeitdauer von 1 bis 5 Stunden wird die Heizphase durch Ausschalten des Gebläses 63 und des Erhitzers 64 beendet. In der anschließenden Abkühlphase werden kalte Abgase vom Gebläse 38 über die Leitungen 39 und 47 sowie die Klappe 48 in den Behälter 59 geblasen und durchströmen dabei die Molekularsiebpackung 60 von unten nach oben (die Klappe 67 ist während dieses Vorgangs geschlossen). Das kalte Abgas kühlt das Molekularsieb ab und tritt über die Klappe 66 aus dem Behälter aus (die Klappe 61 ist während des Vorgangs geschlossen). Über die Leitung 65 durchströmt das jetzt erwärmte Abgas den ausgeschalteten Erhitzer 64 und das ausgeschaltete Gebläse 63 und gelangt über die Leitung 73 und den Tropfenabscheider 70 in den Kondensationswärmetauscher 69. Hier wird das Abgas heruntergekühlt und strömt über eine Leitung 73 und eine Leitung 74 sowie eine Klappe 75 in den Adsorptionsbehälter 42. Dabei ist die Klappe 41 geschlossen. Das Abgas steigt durch das Molekularsieb 43 nach oben, das sich während der Kühlphase des Molekularsiebes 60 noch in der Beladephase befindet. Es tritt an der Oberseite des Adsorptionsbehälters 42 über die Klappe 44 in die Leitungen 45 und 46 und entweicht in die Atmosphäre. Eine an der Oberseite des Adsorptionsbehälters befindliche weitere Klappe 76 ist dabei geschlossen; diese Klappe 76 liegt in einer Leitung 77, die sowohl mit der Leitung 65 als auch dem Auslaß des Erhitzers 64 in Verbindung steht.

Nach 1 bis 3 Stunden ist die Kühlphase des Behälters 59 beendet, so daß nun eine Umschaltung der Beladung vom Behälter 42 auf den Behälter 59 erfolgen kann. Während der Beladung des Behälters 59 wird der Behälter 42 in entsprechender Weise regeneriert.

## Ansprüche

1. Verfahren zum Abscheiden und Rückgewinnen von flüchtigen Lösungsmitteln aus wasserdampfhaltiger Abluft von Trockenreinigungsmaschinen, Metallentfettungsanlagen, Anlagen zum Reinigen von elektronischen Leiterplatten, Lösungsmittelbädern und ähnlichen Anlagen, bei dem die Abluft durch regenerierbare Molekularsiebe hindurchgeleitet und dann in die Atmosphäre abgegeben wird, wobei die Abluft zunächst durch eine ausschließlich den Wasserdampf und anschließend durch eine ausschließlich die Lösungsmitteldämpfe adsorbierende Molekularsiebpackung hindurchgeleitet wird und daß die beiden Molekularsiebpackungen unabhängig voneinander durch Erhitzen mittels Luft oder Inertgas regeneriert werden, dadurch gekennzeichnet, daß die ausschließlich Wasserdampf adsorbierende Molekularsiebpackung zur Atmosphäre hin, die ausschließlich Lösungsmitteldämpfe adsorbierende Molekularsiebpackung in einem geschlossenen Kreislauf regeneriert wird, und daß die Lösungsmitteldämpfe innerhalb des geschlossenen Kreislaufs an einem Kondensationswärmetauscher kondensiert und aufgefangen und zur Wiederverwendung zurückgeführt werden.

2. Verfahren nach Anspruch 1 für einen kontinuierlichen Betrieb, dadurch gekennzeichnet, daß die Abluft abwechselnd durch zwei parallel geschaltete Molekularsiebpackungspaare hindurchgeleitet wird, wobei sich jeweils ein Molekularsiebpackungspaar in der Beladephase, das andere in der Desorptionsphase befindet.

3. Verfahren nach Anspruch 1 oder 2, dadurch gekennzeichnet, daß in der Desorptionsphase die Molekularsiebpackungen mittels Heißluft oder Heiß-Inertgas erhitzt werden, die in einer Richtung entgegengesetzt der Strömungsrichtung der in der Beladephase hindurchströmenden Abgase hindurchgeleitet wird.

4. Verfahren nach einem der Ansprüche 1 - 3, dadurch gekennzeichnet, daß nach der Desorptionsphase Kühlluft oder Kühlinertgas durch die Molekularsiebpackungen hindurchgeleitet wird, und zwar in einer Richtung gleich derjenigen der in der Beladephase hindurchströmenden Abgase.

5. Vorrichtung zur Durchführung des Verfahrens nach einem der Ansprüche 1 - 4, mit einer regenerierbaren Molekularsieb-Reinigungsstufe, gekennzeichnet durch zumindest einen Behälter (13,20) mit Wasserdampf adsorbierender Molekularsiebpackung (14, 21), durch zumindest einen weiteren Behälter (42, 59) mit Lösungsmittel adsorbierender Molekularsiebpackung (43, 60), durch einen Wärmetauscher (17), durch ein Gebläse (38), wobei Wärmetauscher (17) und Gebläse (38) einerseits mit verschließbare Klappen (15, 22) aufweisenden Auslaßleitungen (16, 23) der Wasserdampf adsorbierenden Molekularsiebbehälter (13,20) und andererseits über mit verschließbaren Klappen (41, 48) versehenen Rohrleitungen (37, 39, 40, 47) mit den Lösungsmitteldämpfe adsorbierenden Molekularsiebbehältern (42, 59) verbunden sind, durch ein Gebläse (24), das in eine die Wasserdampf adsorbierenden Molekularsiebbehälter (13, 20) und einen Erhitzer (27) enthaltende Leitung eingesetzt ist, und durch ein weiteres Gebläse (63), das in eine die Lösungsmitteldämpfe adsorbierenden Molekularsiebbehälter (42, 59), einen Erhitzer (64), den Kondensationswärmetauscher (69) und den Tropfenabscheider (70) enthaltende Ringleitung eingesetzt ist.

6. Vorrichtung nach Anspruch 5, dadurch gekennzeichnet, daß die Ringleitung über Klappen (67, 75) verschließbar ist und der Tropfenabscheider (70) an einen Lösungsmitteltank (71) mit Abtauchung angeschlossen ist.

7. Vorrichtung nach Anspruch 5 oder 6, dadurch gekennzeichnet, daß die Molekularsiebpackungen (14, 21, 43, 60) aus Kugeln oder Zylinder einer Körnung von eins bis zehn Millimeter bestehen.

8. Vorrichtung nach einem der Ansprüche 5 - 7, dadurch gekennzeichnet, daß jeder Wasserdampf adsorbierende Molekularsiebbehälter (13, 20) zwei Auslaßleitungen (16, 35; 23, 31) mit Verschließkappen (15, 36; 22, 30) aufweist, wobei jeweils eine Leitung (16, 23) zu den Lösungsmitteldämpfe adsorbierenden Molekularsiebbehältern (42, 59), die andere Auslaßleitung (35, 31) zur Atmosphäre führt, und daß jeder der Lösungsmitteldämpfe adsorbierenden Molekularsiebbehälter (42, 59) zwei Auslaßleitungen (45, 74; 62, 68) mit Verschließklappen (44, 75; 61, 67) aufweist, wobei jeweils eine Leitung (45, 62) zur Atmosphäre, die andere Leitung (74, 68) zum Kondensationswärmetauscher (69) führt.

## Claims

1. Process for separating and recovering volatile solvents from steam-containing exhaust air from dry-cleaning machines, metal-degreasing installations, installations for cleaning electronic printed circuit boards, solvent baths and similar installations, in which the exhaust air is conducted through molecular sieves, which can be regenerated, and is then emitted into the atmosphere, whereby the exhaust air first of all is conducted through a molecular sieve packing absorbing exclusively the steam and subsequently through a molecular sieve packing absorbing exclusively the solvent vapours, and the two molecular sieve packings are regenerated independently of one another through heating by means of air or inert gas, characterized in that the molecular sieve packing absorbing steam exclusively is regenerated towards the atmosphere, the molecular sieve packing absorbing solvent vapours exclusively is regenerated in a closed circuit, and in that the solvent vapours are condensed and collected within the closed circuit at a condensation heat exchanger and returned for re-use.

2. Process according to claim 1 for a continuous operation, characterized in that the exhaust air is conducted alternately through two molecular sieve packing pairs connected in parallel, whereby one molecular sieve packing pair is located in the loading phase, the other in the desorption phase respectively.

3. Process according to claim 1 or 2, characterized in that in the desorption phase the molecular sieve packings are heated by means of hot air or hot inert gas, which is conducted through in a direction opposite the flow direction of the exhaust gases flowing through in the loading phase.

4. Process according to one of claims 1 - 3, characterized in that after the desorption phase, cool air or cool inert gas is conducted through the molecular sieve packings, and indeed in a direction which is the same as that of the exhaust gases flowing through in the loading phase.

5. Device for carrying out the process according to one of claims 1 - 4, having a molecular sieve cleaning stage, which can be regenerated, characterized by at least one container (13, 20) with steam-absorbing molecular sieve packing (14, 21), by at least one further container (42, 59) with solvent-absorbing molecular sieve packing (43, 60), by a heat exchanger (17), by a fan (38), whereby heat exchanger (17) and fan (38) on the one hand are connected to outlet lines (16, 23), having lockable shutters (15, 22), of the steam-absorbing molecular sieve containers (13, 20) and on the other hand are connected to the molecular sieve containers (42, 59), absorbing solvent vapours, by means of pipe lines (37, 39, 40, 47) provided with lockable shutters (41, 48), by a fan (24) which is inserted into a line containing the steam-absorbing molecular sieve containers (13, 20) and a heater (27), and by a further fan (63) which is inserted into an annular line containing the molecular sieve containers (42, 59), absorbing the solvent vapours, a heater (64), the condensation heat exchanger (69) and the drop separator (70).

6. Device according to claim 5, characterized in that the annular line can be locked by means of shutters (67, 75) and the drop separator (70) is attached to a solvent tank (71) with dip.

7. Device according to claim 5 or 6, characterized in that the molecular sieve packings (14, 21, 43, 60) consist of balls or cylinders of a granulation of one to ten millimetres.

8. Device according to one of claims 5 - 7, characterized in that each steam-absorbing molecular sieve container (13, 20) has two outlet lines (16, 35; 23, 31) with locking caps (15, 36; 22, 30), whereby one line (16, 23) leads to the molecular sieve containers (42, 59), absorbing solvent vapours, the other outlet line (35, 31) to the atmosphere respectively, and in that each of the molecular sieve containers (42, 59), absorbing solvent vapours, has two outlet lines (45, 74; 62, 68) with locking shutters (44, 75; 61, 67), whereby a line (45, 62) leads to the atmosphere, the other line (74, 68) to the condensation heat exchanger (69) respectively.

**Revendications**

1. Procédé de séparation et de récupération de solvants volatils de l'air d'échappement porteur de vapeur d'eau de machines de nettoyage à sec, d'installations de dégraissage de métaux, d'installations de nettoyage de plaques de circuits imprimés électroniques, de cuves de solvants et d'installations analogues, dans lequel procédé l'air d'échappement est envoyé à travers des tamis moléculaires régénérables et est ensuite libéré dans l'atmosphère, l'air d'échappement étant acheminé tout d'abord à travers un paquet de tamis moléculaires adsorbant exclusivement la vapeur d'eau et ensuite à travers un paquet de tamis moléculaires adsorbant exclusivement les vapeurs de solvant et les deux paquets de tamis moléculaires étant régénérés indépendamment l'un de l'autre par chauffage à l'aide d'air ou de gaz inerte, le procédé étant caractérisé en ce que le paquet de tamis moléculaires adsorbant exclusivement la vapeur d'eau se dégage dans l'atmosphère, le paquet de tamis moléculaires adsorbant exclusivement les vapeurs de solvant est régénéré dans un circuit fermé et les vapeurs de solvant qui se trouvent à l'intérieur du circuit fermé sont condensées dans un échangeur de chaleur à condensation, récupérées et renvoyées à une autre utilisation.

2. Procédé selon la revendication 1 en fonctionnement en continu, caractérisé en ce que le gaz d'échappement est envoyé alternativement à travers deux paires de paquets de tamis moléculaires connectées en parallèle, une paire de tamis moléculaires se trouvant dans la phase de chargement tandis que l'autre se trouve dans la phase de désorption.

3. Procédé selon l'une et/ou l'autre des revendications 1 et 2, caractérisé en ce que, dans la phase de désorption, les paquets de tamis moléculaires sont réchauffés par de l'air chaud ou un gaz inerte de chauffage, qui est acheminé à contre-courant vis-à-vis des gaz d'échappement passant dans la phase de chargement.

4. Procédé selon l'une et/ou l'autre des revendications 1 à 3, caractérisé en ce que, après la phase de désorption, de l'air froid ou un gaz inerte froid est acheminé à travers les paquets de tamis moléculaires dans la même direction que celle des gaz d'échappement passant dans la phase de chargement.

5. Dispositif permettant de réaliser le procédé selon l'une et/ou l'autre des revendications 1 à 4, lequel dispositif est doté d'un étage de nettoyage par tamis moléculaires régénérables, caractérisé en ce qu'il comporte au moins un réceptacle (13, 20) doté d'un paquet de tamis moléculaires (14, 21) adsorbant la vapeur d'eau, au moins un autre réceptacle (42, 59) doté d'un paquet de tamis moléculaires (43, 60) adsorbant le solvant, un échangeur (17), une soufflerie (38), l'échangeur de chaleur (17) et la soufflerie (38) étant reliés d'une part à des canalisations d'échappement (16, 23) du réceptacle de tamis moléculaires (13, 20) adsorbant la vapeur d'eau munies de soupapes fermables (15, 22) et d'autre part, via des canalisations (37, 39, 40, 47) munies de soupapes fermables (41, 48) avec les réceptacles de tamis moléculaires (42, 59) adsorbant les vapeurs de solvant, le dispositif comportant par ailleurs une soufflerie (24) qui est agencée dans une canalisation contenant le réceptacle de tamis moléculaires (13, 20) adsorbant la vapeur d'eau et un réchauffeur (27) et une autre soufflerie (63) qui est agencée dans une canalisation annulaire contenant le réceptacle de tamis moléculaires (42, 59) adsorbant les vapeurs de solvant, un réchauffeur (64), l'échangeur de chaleur à condensation (69) et le séparateur à sec (70).

6. Dispositif selon la revendication 5, caractérisé en ce que la canalisation annulaire peut être fermée par des soupapes (67, 75) et le séparateur à sec (70) est raccordé à un réservoir de solvant (71) à pompage.

7. Dispositif selon l'une et/ou l'autre des revendications 5 et 6, caractérisé en ce que les paquets de tamis moléculaires (14, 21, 43, 60) sont constitués de billes ou de cylindres d'un calibre de un à dix millimètres.

8. Dispositif selon l'une et/ou l'autre des revendications 5 à 7, caractérisé en ce que chaque réceptacle de tamis moléculaires (13, 20) adsorbant la vapeur d'eau comporte deux canalisations d'échappement (16, 35; 23, 31) dotées de soupapes fermables (15, 36; 22, 30), respectivement une canalisation (16, 23) menant aux réceptacles de tamis moléculaires (42, 59) adsorbant les vapeurs de solvant, l'autre canalisation d'échappement (35, 31) menant à l'atmosphère, et chacun des réceptacles de tamis moléculaires (42, 59) adsorbant les vapeurs de solvant comprend deux canalisations d'échappement (45, 74; 62, 68) dotées de soupapes fermables (44, 75; 61, 67), respectivement une canalisation (45, 62) menant à l'atmosphère tandis que l'autre canalisation (74, 68) mène à l'échangeur de chaleur à condensation (69).